# EUROPÄISCHE PATENTSCHRIFT

(11) **EP 0 818 636 B1**
(45) Veröffentlichungstag und Bekanntmachung des Hinweises auf die Patenterteilung: **02.05.2003**
(21) Anmeldenummer: 97109323.2
(22) Anmeldetag: 09.06.1997
(51) Int. Cl.: F16D 65/12, C04B 41/87, F16D 69/02

(54) **Fahrzeugbrems- bzw. Fahrzeug-Kupplungsscheibe aus mit SIC beschichtetem C-C Werkstoff**
Vehicle brake or clutch disc made from a C-C material coated with SiC
Disque de frein ou d'embrayage pour véhicules fait d'un matériau C-C revêtu de Sic

(30) Priorität: 14.06.1996 DE 29610498 U
(43) Veröffentlichungstag der Anmeldung: 14.01.1998
(73) Patentinhaber: Zornik, Miklavz, 4260 Bled (SI)
(72) Erfinder: Zornik, Miklavz, 4260 Bled (SI)
(74) Vertreter: Grünecker, Kinkeldey, Stockmair & Schwanhäusser Anwaltssozietät

(56) Entgegenhaltungen:
- EP-A- 0 228 166
- EP-A- 0 300 756
- EP-A- 0 492 436
- EP-A- 0 642 040
- WO-A-95/26941
- DE-A- 2 653 665
- DE-A- 3 933 715
- DE-A- 4 438 456
- GB-A- 1 457 757
- US-A- 3 925 577
- US-A- 4 318 955
- US-A- 4 837 073
- DATABASE WPI Section Ch, Week 9315 Derwent Publications Ltd., London, GB; Class A32, AN 93-121619 XP002022702 & JP 05 059 350 A (IBIDEN) , 9.März 1993
- DATABASE INSPEC INSTITUTE OF ELECTRICAL ENGINEERS, STEVENAGE, GB Inspec No. 5222295, CHEN-CHI M MA ET AL: "Microstructure and oxidation resistance of SiC coated carbon-carbon composites via pressureless reaction sintering" XP002022727 & JOURNAL OF MATERIALS SCIENCE, 1 FEB. 1996, CHAPMAN & HALL, UK, Bd. 31, Nr. 3, ISSN 0022-2461, Seiten 649-654,
- PATENT ABSTRACTS OF JAPAN vol. 017, no. 577 (C-1122), 20.Oktober 1993 & JP 05 170537 A (MITSUBISHI HEAVY IND LTD), 9.Juli 1993,

## Beschreibung

Die Erfindung betrifft ein Verfahren zur Herstellung von mit Silizium-Karbid beschichteten Reibkörpern aus Kohlaustoff - Werkstoff, vorzugsweise einer Fahrzeugbrems- bzw. Fahrzeugkupplungsscheibe.

C-C-Werkstoffe werden bisher im Fahrzeugbau lediglich für Hochleistungsfahrzeuge im Rennsport bei hochtemperaturbelasteten Bauteilen eingesetzt. C-C-Werkstoffe (Kohlenstoff-Kohlenstoff) sind eine eigene Art von Verbundwerkstoffen, die gewisse Ähnlichkeiten zu kohlefaserverstärkten Kunststoffen aufweisen. Im Gegensatz zu diesen bestehen C-C-Werkstoffe aus einem Kohlefasersubstrat, das in eine Kohlenstoffmatrix eingebettet ist.

Die Entwicklung dieser Werkstoffe begann etwa 1958 bei der amerikanischen Luftwaffe für Flugzeuge und bei der NASA. Erstmals in größerem Umfang wurden diese Werkstoffe beim Space Shuttle eingesetzt.

Obwohl in C-C-Werkstoffen beide Komponenten, d.h. die Faserkomponente und die Füllkomponente, aus Kohlenstoff bestehen, hängt das Materialverhalten wesentlich von dem Zustand des Kohlenstoffes der jeweiligen Komponente ab. Kristallförmiger Kohlenstoff, d.h. Graphit, besteht aus eng zusammengefügten hexagonalen Kristallen, die in Schichten angeordnet sind und die durch van der Waals Kräfte zusammengehalten werden. Neben seinen definierten Formen Graphit und Diamant kann Kohlenstoff eine Vielzahl von Zwischenstufen in quasi-kristalliner Form einnehmen, die von einem amorphen, glasartigen Kohlenstoff bis zu hochkristallinem Graphit reicht. Die Anisotropie des Kohlenstoff-Einzelkristalls ermöglicht vielfältige Kombinationen zwischen den beiden Kohlenstoff-Werkstoffkomponenten.

Für die Faserkomponente werden Fäden, Bänder oder Gewebe eingesetzt. Die höchste Festigkeit wird durch eine gerade Faseranordnung erzielt. Im größten Teil der technischen Anwendungen werden jedoch Gewebe eingesetzt, wobei es sich in der Regel um zweidimensionale (2D) Gewebe handelt. Sofern eine hohe Festigkeit in alle drei Raumrichtungen erforderlich ist, können auch in drei Raumrichtungen verwebte Gewebe, d.h. 3D-Gewebe eingesetzt werden.

Als Matrixmaterial werden thermoplastische Kunststoffe, Pech, Phenolharze und gasförmige Kohlenwasserstoffe eingesetzt.

Ein Verfahren zur Herstellung von C-C-Werkstoffen besteht darin, das beabsichtigte Werkstück aus Fasermaterial zu modellieren und dessen Poren mit Kohlenstoff auszufüllen. Hierzu wird das vorgeformte Werkstück in einen Ofen eingebracht und mit einem Kohlenwasserstoffgas, normalerweise Methan, begast. Dabei lagert sich der Kohlenstoff in dem Gewebe ab. Bei Temperaturen in der Größenordnung von 1100°C besitzt der abgelagerte Kohlenstoff eine isotrope Struktur und wird als pyrolytischer Kohlenstoff bezeichnet. Zwischen 1000°C und 1700°C besitzt der abgelagerte Kohlenstoff eine Zwischenstufen-Mikrostruktur, die mit zunehmender Temperatur immer stärker graphitisch wird. Bei Ablagerungstemperaturen zwischen 1700°C und 2300°C wird Graphit abgelagert, der auch als pyrolytischer Graphit bezeichnet wird.

Dieses Verfahren, das in der Literatur auch als CVD-Verfahren (Chemical Vapour Deposition) bezeichnet wird, ist sehr langsam und erfordert eine hohe Genauigkeit der Einstellung der Prozeßparameter. Normalerweise dauert es mehrere Wochen bis ein einzelnes Teil fertiggestellt ist.

Ein zweites Herstellungsverfahren besteht darin, zuerst kohlefaserverstärkte Polymerstrukturen auszuhärten und anschließend dieses Material unter einer inerten Atmosphäre bei etwa 850°C - 1000°C in den Kohlenstoffzustand zu überführen. Die Heizphase zur Überführung in den Kohlenstoffzustand beträgt dabei normalerweise etwa 1 Woche. Nach diesem Verfahren hergestelltes, reines C-C-Material wird bereits bei der Herstellung von Bremsen verwendet.

C-C-Werkstoff höherer Dichte (ρ>1,95 g/cm³) wird durch ein Hochtemperatur/Hochdruck-Verfahren erzielt, bei dem zuerst ein Gewebe mit einem hochkohlenstoffhaltigen Material imprägniert und anschließend unter hohen Temperaturen in den Kohlenstoffzustand überführt wird. Obwohl dieses Verfahren eine große Bandbreite von Mikrostrukturen ermöglicht, wird es aufgrund der mit der Erzeugung des Hochdruckes verbundenen Ausrüstung und erforderlichen Sicherheitstechnik kaum eingesetzt.

C-C-Werkstoffe behalten im Unterschied zu Metall- und Keramikwerkstoffen selbst bei hohen Temperaturen ihre Festigkeit bei. Hohe thermische Leitfähigkeit und ein geringer thermischer Ausdehungskoeffizient macht C-C-Werkstoffe widerstandsfähig gegen starke Temperaturschwankungen. Trotz ihrer exzellenten Hochtemperatureigenschaften wurden C-C-Werkstoffe bisher lediglich für Bremsen von Flugzeugen und Rennwagen sowie für Hitzeschilde von Raumfahrzeugen und für Raketendüsen eingesetzt. Ein weitergehender Einsatz dieser Werkstoffe wurde bisher dadurch begrenzt, daß diese Werkstoffe neben den extrem hohen Herstellungskosten bei Temperaturen von etwa 400°C zu oxidieren beginnen. Dies war für die obengenannten bisherigen Anwendungsfälle angesichts eines stets zeitlich beschränkten Einsatzes unproblematisch, verhinderte jedoch bisher deren Einsatz in Langzeitanwendungen, beispielsweise bei Serienautomobilen.

Obwohl bereits vorgeschlagen wurde, zur Verbesserung des Oxidationsverhaltens, C-C-Werkstoffe zu beschichten, ist bisher kein Werkstoffsystem gefunden worden, das beispielsweise den Einsatz von C-C-Werkstoffen in Verbrennungskraftmaschinen ermöglicht. Eine Hauptschwierigkeit beim Beschichten besteht darin zu verhindern, daß aufgrund unterschiedlichen Wärmedehnungsverhaltens des C-C-Werkstoffes und des Beschichtungsmaterials Schäden, z.B. Risse in der Beschichtung, auftreten. Bisher werden lediglich etwa 10 bis 15% aller C-C-Werkstoffe überhaupt gegen Oxidation geschützt.

Für die Beschichtung werden bisher vor allem Siliziumkeramiken eingesetzt, die jedoch nur eine thermische Belastung der Werkstücke unterhalb von 1700°C zulassen. Vom Space Shuttle ist der Einsatz eines beschichteten C-C-Werkstoffes für Hitzeschilde bekannt. Hierbei wurde in Zwischenstufen Kohlenstoff unter einer inerten Atmosphäre bei 1.760°C Silizium eindiffundiert. Anschließend wurde der Werkstoff mit Tetraethylorthosilikat (TEOS) imprägniert, hydrolisiert und wärmebehandelt, wodurch eine SiO₂-Beschichtung mit einer Dicke von etwa 0,5 mm erzeugt wurde. Dieses Verfahren ist jedoch technisch sehr aufwendig, so daß diese Werkstoffe für den Einsatz bei Massenbauteilen ungeeignet sind. Gleiches gilt für den Einsatz von CVD-Verfahren zur Aufbringung von SiC oder Si₃N₄ Beschichtungen auf Zwischenstufen C-C-Werkstoff.

Bei Rennfahrzeugen wurden in der Praxis bisher lediglich reine, unbeschichtete C-C-Werkstoffe für die Bremsen eingesetzt. Derartige Bremsen besitzen einerseits bei Raumtemperatur einen zu geringen Reibungskoeffizienten, um ein ausreichendes Bremsverhatten zu ermöglichen. Andererseits tritt bei hohen Temperaturen verstärkt Oxidation auf, so daß der Betriebsbereich der bisher eingesetzten C-C-Fahrzeugbremsscheiben zwischen 400°C und 600°C liegt. Es ist daher erforderlich, die Fahrzeugbremsen vor ihrem Einsatz aufzuwärmen, d.h. bei Rennfahrzeugen eine Aufwärmrunde zu fahren. Derartige Bremsen sind daher bisher für den Einsatz in Serienfahrzeugen nicht geeignet bzw. würden eine aufwendige Temperaturkontrolle erfordern. Aufgrund des hohen Abriebverhaltens ist zudem der Verschleiß an den Bremsscheiben sehr hoch, so daß diese normalerweise nach einem Rennen ausgetauscht werden müssen. Die obigen Ausführungen gelten sinngemäß auch für Fahrzeugkupplungsscheiben.

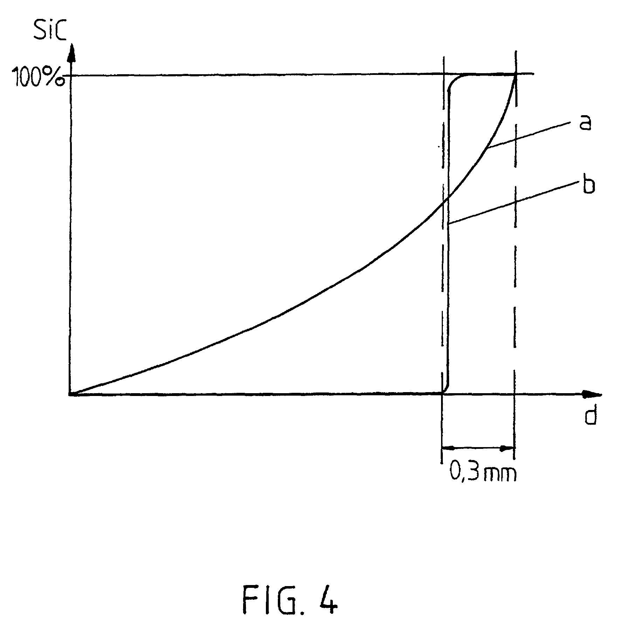

Eine Bremsscheibe der eingangs genannten Art ist aus der JP-A-5 059 350 bekannt. Die Beschichtung wird dort allerdings dadurch hergestellt, daß ein C-C-Werkstück unter einer giftigen SiO-Atmosphäre auf Temperaturen von 1.300° bis 2.300° aufgeheizt wird, so daß eine SiC-Schicht an der Oberfläche entsteht, oder sich das gesamte Werkstück in C-C/SiC-Werkstoff umwandelt. Die so erzeugte SiC-Schicht ist eine Diffusionsschicht. Dies ist daran erkennbar, daß die Konzentration des Siliziumgehaltes von der Oberfläche des Werkstückes nach innen nur allmählich abnimmt, wie dies beispielhaft anhand der Kurve a in Fig. 4 dargestellt ist. SiC innerhalb des Werkstückes ist jedoch aufgrund der schlechten Wärmeleitfähigkeit von SiC unerwünscht. Zudem werden die mechanischen Eigenschaften des C-C-Werkstoffes innerhalb der Bremsscheibe beeinträchtigt.

Das aus JP-A-50 59 359 bekannte Herstellungsverfahren ist dahingehend nachteilig, dass die Eindiffusion von SiC während der Gefügeumwandlung des C-C-Werkstücks erfolgt. Während des Umwandlungsprozesses treten größere Maßveränderungen auf, die nur an dem fertigen Werkstück ausgeglichen werden können, was aufgrund der Genauigkeitsanforderungen an die Parallelität der Bremsflächen und der hohen Härte von SiC einen hohen Endbearbeitungsaufwand erfordert.

Weitere C-C-Werkstücke mit SiC-Oberflächenschichten sind aus aus DE-A1-26 53 665 bekannt. Hierbei handelt es sich bei den SiC-Oberflächenschichten um Diffusionsschichten mit den bereits erwähnten Nachteilen. Da Diffusionsvorgänge nur langsam ablaufen, ist das eingesetzte Verfahren sehr langsam und für eine Serienfertigung von Reibelementen nicht geeignet.

Weiterer Stand der Technik ist enthalten in EP 0 228 166 A, EP 0 642 040, GB 14 57 757 A, US 4 318 955 A, DE 44 38 456 A, US 4 837 073, DE 39 33 715 A, WO95/26941 A, EP 0 492 436 A, US 3 925 577 A, Patentabstracts aus Japan 017/577 vom 20.10.93 (JP 05 17 0537 A).

Bei dem gattungsgemäßen, aus EP 0 300 756 A bekannten Verfahren zum Herstellen von Reibelementen wird der C-C-Grundkörper in einer Form unter Druck und erhöhter Temperatur ausgeformt, außerhalb der Form in Stickstoff bei erhöhter Temperatur karbonisiert und anschließend in Methan und unter Unterdruck durch ein CVD-Verfahren verdichtet Der karbonisierte und verdichtete C-C-Grundkörper wird dann durch mechanische Bearbeitung in die endgültige Form und Größe gebracht Anschließend wird zumindest eine Reibfläche in Siliciumcarbid umgewandelt, wobei Siliciumpulver auf die Reibflächen aufgebracht und auf der Reibfläche bei einer Temperatur von 1400°C bis 2000°C in Argongas bei erhöhtem Druck geschmolzen und in die Reibfläche eindiffundiert wird (Eindringtiefe 0,38 bis 3,8 mm). Die SiC-Beschichtung ist eine Diffusionsschicht an einem karbonisierten C-C-Grundkörper.

Der Erfindung liegt die Aufgabe zugrunde, ein Verfahren zur Herstellung von Reibelementen aus C-C/SiC-Werkstoff anzugeben, das eine effiziente Herstellung von Reibelementen ermöglicht, die im Wesentlichen die mechanischen Eigenschaften von Reibelementen aus reinem C-C-Werkstoff aufweisen, jedoch diesen gegenüber eine erhöhte Standzeit und einen erweiterten Einsatzbereich besitzen.

Diese Aufgabe wird mit dem Verfahren gemäß Anspruch 1 gelöst.

Durch die Aufbringung von SiC oder Si in flüssiger Form auf den Grundkörper kann die Kontaktzeit mit der Si- bzw. SiC-Umgebung für den Grundkörper möglichst kurz gehalten werden, um so ein unerwünschtes Eindiffundieren von SiC in den C-C-Werkstoff und damit eine Veränderungen von dessen mechanischen Eigenschaften zu vermeiden. Der Grundkörper bleibt so durchgehend graphitisch.

Durch die Beschichtung wird das Abrasionsverhalten der Fahrzeugbrems- bzw. Fahrzeugkupplungsscheiben erheblich verbessert, so daß nunmehr auch ein Langzeiteinsatz derartiger Fahrzeugbrems- bzw. Fahrzeugkupplungsscheiben ermöglicht wird. Durch den gegenüber aus reinem C-C-Werkstoff bestehenden Fahrzeugbrems- bzw. Fahrzeugkupplungsscheiben deutlich geringeren Abrieb, kann das Spiel der Bremsen bzw. Kupplung über einen langen Zeitraum konstant gehalten werden, so daß ein häufiges Nachstellen vermieden wird. Zudem bleibt das Ansprechverhalten über einen längeren Zeitraum konstant.

Erfindungsgemäß hergestellte Brems- bzw. Kupplungsscheiben ermöglichen beispielsweise nunmehr bei Rennfahrzeugen den Einsatz für mehrere Rennen. Aufgrund des nunmehr unkritischen Oxidationsverhaltens wird das Temperaturfenster, in dem die Bremsen bzw. Kupplungen eingesetzt werden, erheblich erweitert. Auch ein Einsatz bei Serienfahrzeugen wird hierdurch ermöglicht. Gegenüber herkömmlichen Fahrzeugbremsscheiben aus Stahl ergibt sich auch eine erhebliche Gewichtserspamis, wegen der geringeren Dichte des C-C-Werkstoffes gegenüber Stahl. Diese beträgt etwa 1,4 -1,9 g/cm³ im Vergleich zu Stahl, der eine Dichte von etwa 7,9 g/ cm³ aufweist. Die Fahrzeugbremsscheiben aus C-C-Werkstoff können hinsichtlich ihrer Maße wie Stahl-Fahrzeugbremsscheiben dimensioniert werden. Bei Rennwagen werden derzeit Stahlbremsscheiben in einer Dicke von ca. 29 bis 30 mm verwendet. Aufgrund der hohen Struktursteifigkeit des C-C-Werkstoffes kann diese Dicke im Gegensatz zu Stahlbremsscheiben auf 19 mm reduziert werden, wobei die Dicke im Bereich der Verschraubungsflächen ca. 10 bis 11 mm beträgt. Dies gilt grundsätzlich auch für Serienfahrzeuge. Die Dickenverringerung trägt neben der geringeren Dichte zu einer weiteren Gewichtserspamis bei. Die erfindungsgemäßen Fahrzeugbremsscheiben können auch bei Bahnfahrzeugen eingesetzt werden, wobei Durchmesser bis 500 mm und Scheibendicken bis 60 mm möglich sind. Diese Ausführungen gelten sinngemäß auch für Kupplungsscheiben.

Für den Grundkörper wird eine Matrix aus C-C-Werkstoff im graphitierten Zustand in hochkristalliner Form eingesetzt, d.h. C-C-Werkstoff, der bei einer Temperatur von mindestens 1.700°C erzeugt wurde.

Bevorzugt wird C-C-Werkstoff eingesetzt, der bei 2.000°C ±15°C graphitiert worden ist.

Bei der Kristallisation von Siliziumkarbid können sowohl α-Kristalle als auch β-Kristalle entstehen. Für die Beschichtung der Reibelemente werden Siliziumkarbidschichten bevorzugt, die überwiegend aus α-Kristallen, idealerweise nur aus α-Kristallen, bestehen. Auch gemischte Gefüge können verwendet werden.

Vorzugsweise wird die Siliziumkarbidbeschichtung als Tauchbadbeschichtung aufgebracht, die durch Eintauchen des Grundkörpers in eine Siliziumkarbidschmelze oder auch in einer Siliziumschmelze entsteht bzw. durch schlagartige Reaktion mit der flüssigen Schmelze in einem Reaktionstauchbad. Dies ermöglicht einerseits eine schnelle Herstellung und führt andererseits zu einer Beschichtung, die den hohen Einsatztemperaturen bei Fahrzeugbremsen, die lokal etwa 2.000°C betragen können, standhält.

Alternativ können Siliziumkarbidbeschichtungen durch eine Vakuumimprägnierung erzeugt werden. Hierbei wird flüssiges Silizium oder Siliziumkarbid mittels eines Vakuums durch einen aus C-C-Werkstoff bestehenden Fahrzeugbremsscheibenrohling durchgesaugt. Die Imprägnierdauer beträgt etwa 5 Minuten und ist damit erheblich schneller als bisher eingesetzte CVD-Verfahren. Auch die durch Vakuumimprägnierung erzeugte SiC-Beschichtung führt zu einer den obengenannten Temperaturanforderungen bei Fahrzeugbremsen standhaltenden Stabilität.

In beiden Fällen dringt SiC auch in die Gefügematrix des C-C-Werkstoffes ein, um eine fest Verankerung der SiC-Beschichtung zu bewirken. Dieses Eindringen betrifft jedoch nur die Randschicht des C-C-Werkstückes, wobei sich eine erheblich schärfere Phasengrenze ergibt als bei Diffusionsverfahren.

Vorzugsweise wird eine SiC-Beschichtung eingesetzt, die bei einer Temperatur von 2200°C mit einem Toleranzbereich von etwa 3°C aufgebracht worden ist. Vorzugsweise ist hierbei die Temperatur des aus C-C-Werkstoff bestehenden Rohlings und der Schmelze gleich hoch.

Bevorzugt wird die SiC-Beschichtung 0,2 - 0,3 mm stark gebildet.

Vorzugsweise wird der Scheibenrohling aus mehreren Schichten übereinander gelegter, zweidimensionaler Kohlenstoffgewebeschichten gebildet, die in herkömmlicher Weise in eine Kohlenstoffmatrix eingebettet werden. Grundsätzlich können jedoch auch dreidimensionale Gewebe eingesetzt werden, oder auch aus Faserschnitzeln in irregulärer Anordnung hergestellte Fasergebilde. Im Gegensatz zu dreidimensionalen Geweben ermöglicht der Einsatz zweidimensionaler Gewebe in Richtung der Gewebeebene eine höhere Festigkeit als bei dreidimensionalen Geweben erreicht werden kann. Durch den Einsatz zweidimensionaler Gewebe können unter Ausnutzung der Anisotropieeigenschaften des Kohlenstoffes, insbesondere im graphitiertem Zustand, die Festigkeitseigenschaften der Fahrzeugbrems- bzw. Fahrzeugkupplungsscheibe nach Bedarf in gewünschter Weise eingestellt werden.

Der Grundkörper der Fahrzeugbrems- bzw. Fahrzeugkupplungsscheibe wird vor dem Beschichten zumindest in einem Reibflächenbereich an der Oberfläche geglättet z.B. geschliffen, so daß aufwendige Nachbearbeitungen nach dem Beschichten entfallen. Mit Blick auf das geringe Abrasionsverhalten der SiC-Beschichtung ermöglicht dies die Aufrechterhaltung einer genauen Parallelität der Reibflächen und ein besonders genaues Einstellen des Ansprechsverhaltens der Bremsen bzw. Kupplung, das über lange Zeit aufrechterhalten werden kann.

Das Verfahren erlaubt eine besonders einfache und effiziente Herstellung von C-C/SiC-Werkstücken beispielweise in einem zweistufigen Prozeß. Der Grundkörper kann in dem graphitierten Zustand einfach und sehr genau bearbeitet werden, was bei Brems-bzw. Kupplungsscheiben im Hinblick auf die Parallelität der Reibflächen wichtig ist. Erst nach dieser Bearbeitung erfolgt die Beschichtung mit flüssigem Si oder SiC. Da ein Eindifundieren von SiC in den Grundkörper nicht erforderlich bzw. sogar unerwünscht ist, genügt bereits ein Kurzzeitkontakt mit der flüssigen Si- bzw. SiC-Schmelze, um die Beschichtung herzustellen. Aufgrund der bereits vor der Beschichtung erfolgten genauen Bearbeitung des Grundkörpers ist nach der Beschichtung allenfalls noch ein geringfügiges Glätten der Beschichtung nötig.

Im folgenden wird nun die Erfindung anhand eines bevorzugten Ausführungsbeispiels unter Bezugnahme auf die Zeichnung beschrieben.
- Fig. 1: zeigt eine Fahrzeugbremsscheibe für ein Automobil,
- Fig. 2: zeigt einen Schnitt durch den C-C-Werkstoff,
- Fig. 3: zeigt die Kennwerte der Wärmeleitfähigkeit und der thermischen Ausdehnung des in Fig. 2 dargestellten Werkstoffes, und
- Fig. 4: zeigt eine schematische Gegenüberstellung der SiC-Konzentration in einem C-C-Werkstück im Abstand zur Werkstückoberfläche bei einer bekannten Diffusionsschicht (a) und einer erfindungsgemäßen Beschichtung (b) aus flüssiger Schmelze.

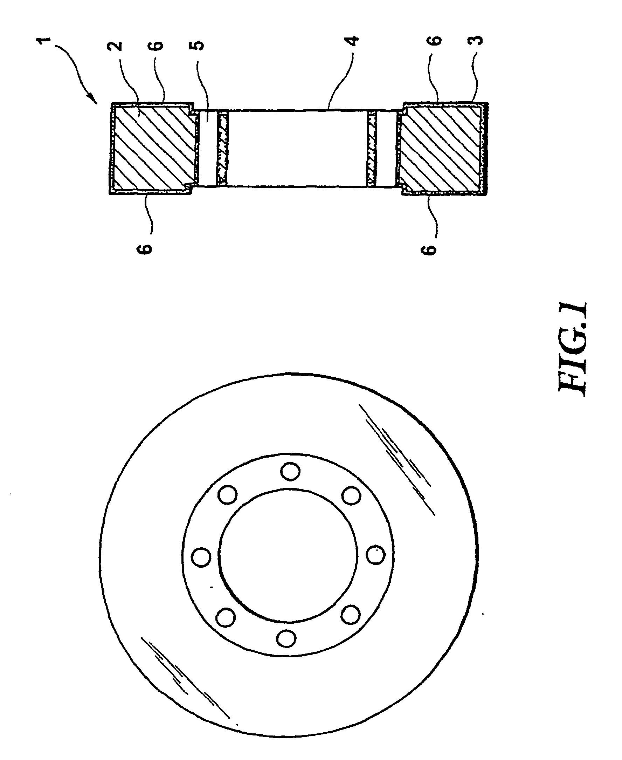

In Fig. 1 ist als Beispiel eine Fahrzeugbremsscheibe 1 für ein Automobil dargestellt. Bei entsprechender Gestaltung kann die im folgenden beschriebene Fahrzugbremsscheibe als Kupplungsscheibe eingesetzt werden. Die Scheibe 1 besteht aus einem aus C-C-Werkstoff hergestellten Grundkörper 2, der an seinen Außenflächen eine SiC-Schicht 3 aufweist. Zur Veranschaulichung der Zeichnung ist in der Schnittdarstellung in Fig. 1 die SiC-Schicht überproportional dargestellt. In der Praxis beträgt ihre Dicke jedoch 0,2 - 0,3 mm.

Die Fahrzeugbremsscheibe weist weiterhin an ihren beiden Seitenflächen angeordnete Montageabsätze 4 zur Befestigung der Bremsscheibe am Fahrzeug auf. Diese Montageflächen können entweder als Vertiefungen ausgebildet werden, die beispielsweise durch Drehen hergestellt werden oder gleich in den Rohling eingeformt werden, oder auch über die Seitenflächen der Bremsscheibe hervorstehen. Im Bereich der Montageflächen sind Bohrungen 5 vorgesehen, über die die Bremsscheibe am Fahrzeug befestigt werden kann.

Weiterhin weist die Bremsscheibe 1 auf beiden Seiten sich ringförmig um die Montageflächen 4 erstreckende Bremsflächen 6 auf. Die Oberfläche dieser ringförmigen Bremsflächen 6 ist durch ein mehrfaches Schleifverfahren geglättet.

Die Siliziumkarbidschicht im gezeigten Ausführungsbeispiel besteht aus einer Tauchbadschicht, die überwiegend Kristalle in α-Anordnung aufweist. Hierzu wird entweder Siliziumkarbidwerkstoff SK 6311 oder SK 3026 eingesetzt. Diese Werkstoffe besitzen folgende Eigenschaften:

| | | SK 6311 | SK 3026 |
|---|---|---|---|
| Dichte | g/cm3 | 3,05 | 3,08 |
| thermischer Ausdehungskoeffizient | K⁻¹ | 4,5x10⁻⁶ | 4,4x10⁻⁶ |
| Wärmeleitfähigkeit bei 20°C | W/mK | 150 | 180 |
| Wärmeleitfähigkeit bei 1200°C | w/mk | 40 | 45 |

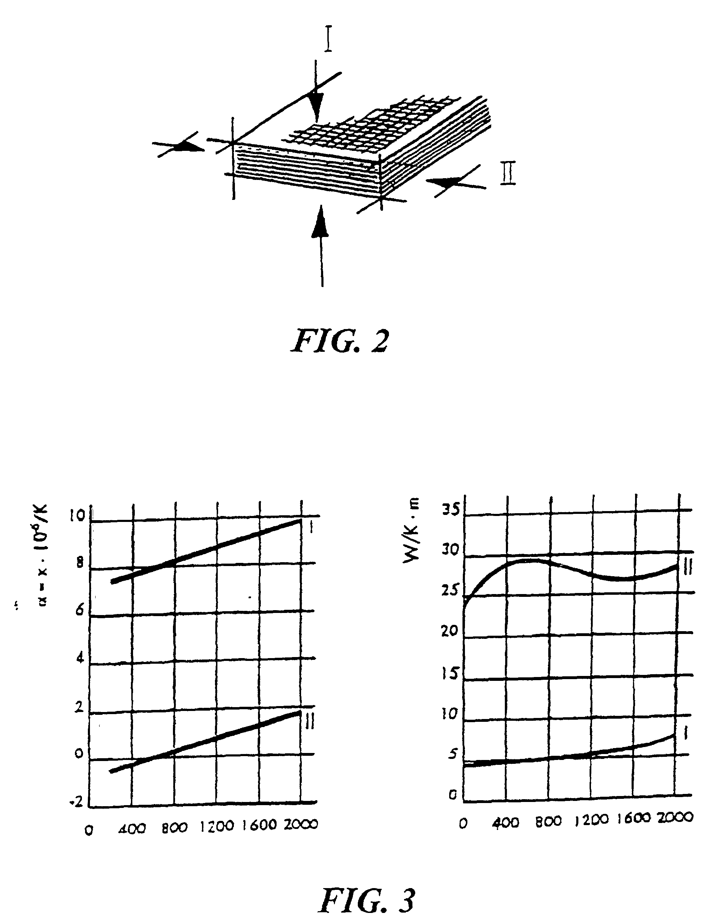

Die Wärmeleitfähigkeit λ und die thermische Ausdehnung α des eingesetzten C-C-Werkstoffes in graphitiertem Zustand (Typ G43, G55 oder G01 des Anmelders) in Abhängigkeit der Richtung bezüglich des in Fig. 2 dargestellten Gewebes ist in Fig. 3 gezeigt. Diese Werte gelten genauso für C-C/SiC-Werkstoff. Fig. 2 zeigt mehrere übereinander angeordnete 2D Gewebeschichten, wobei die Richtung I senkrecht zu der Gewebeebene steht und die Richtung II in Richtung der Fasererstreckung einer Gewebeschicht zeigt. Vorzugsweise erfolgt die Anordnung der 2D Gewebe im wesentlichen parallel zu den Seitenflächen der Fahrzeugbremsscheibe, so daß die Anisotropieeigenschaften der Wärmeleitfähigkeit λ zu einer guten Wärmeableitung in Radialrichtung ausgenutzt werden.

Für die Gewebe werden Multifilamentfasern verwendet, die je nach Bedarf zwischen 3.000 und 12.000 Filamente pro Faden aufweisen. In der Praxis werden Fäden mit 3.000, 8.000 und 12.000 Filamenten eingesetzt Als Matrixfüllmaterial wird Phenolharz eingesetzt. Bei zwei- bis dreimaliger Nachimprägnation ergibt sich für den Grundkörper eine Dichte von 1,4 bis 1,5 g/cm³, vorzugsweise 1,42 bis 1,48 g/cm³. Der so hergestellte Grundkörper besitzt eine Schaumstoffstruktur, die gegenüber herkömmlichen C-C-Werkstoffen, die aus gepreßten Fasem hergestellt sind und eine Dichte von etwa 1,9 g/cm³ aufweisen, besonders leicht ist.

Wie aus Fig. 4 in der Kurve b erkennbar ist, besitzen mit flüssiger Schmelze beschichtete C-C/Sic-Werkstoffe einen deutlich steileren SiC-Konzentrationsgradienten, bezogen auf die Außenfläche des fertig beschichteten Werkstückes, als solche Werkstücke mit Diffusionsschicht.

Bei Raumtemperatur beträgt die dynamische Zugfestigkeit der Scheibe 1 ca. 460 N/mm². Diese Zugfestigkeit erhöht sich bei Temperaturen über 500° um mehr als 30 %.

Im folgenden wird nun die Herstellung der in Fig. 1 gezeigten Scheibe beschrieben.

Hierzu wird zunächst ein üblicher C-C-Grundwerkstoff hergestellt. Dies kann erfolgen durch ein Karbonisieren von mit Phenolharz getränkten Geweben bei etwa 920° bis 950°C. Falls erforderlich, kann ein Nachimprägnieren mit Phenolharz erfolgen. Dieser Werkstoff wird bei einer Temperatur von ca. 1.700°C bis 2.200°C, vorzugsweise 2.200°C ± 15°C in den graphitierten Zustand überführt. Anschließend wird der C-C-Rohling auf Raumtemperatur abgekühlt. Der Rohling besitzt dabei im wesentlichen die Grundform der Fahrzeugbremsscheibe. Dieser weiche Rohling kann einfach durch spanende Fertigungsverfahren bearbeitet werden, beispielsweise durch Drehen, Fräsen, Bohren oder Schleifen. In dem gezeigten Ausführungsbeispiel werden die Montageflächen 4 durch Drehen hergestellt. Die Bearbeitung erfolgt bereits hier auf die Fertigmaße abzüglich der aufzubringenden Schichtdicke, da bei der Beschichtung an dem Grundkörper selbst im Gegensatz zu den bekannten Beschichtungsverfahren keine Maßänderungen mehr auftreten. Es ist so möglich, Parallelitätstoleranzen von 0,02 mm bei Scheiben mit einem Durchmesser von 300 mm einzuhalten.

Der bearbeitete Rohling wird dann kurz in ein flüssiges Si- bzw. SiC-Bad eingetaucht, wobei die Badtemperatur 2.200°C ± 3°C beträgt, anschließend aus dem Bad herausgenommen und auf Raumtemperatur abgekühlt. Dabei bildet sich an der Oberfläche des Rohlings eine SiC-Beschichtung. Teilweise dringt auch SiC-Material in die Matrix des C-C-Werkstoffes ein. Die Eindringtiefe ist gegenüber Diffusionsschichten gering und betrifft nur den äußersten Randbereich. Sie gewährleistet jedoch eine feste Verbindung der SiC-Beschichtung mit dem C-C-Grundkörper, die sich in diesen Poren verhakt. Die gesamte Herstellung erfolgt unter einer inerten Athmosphäre.

Alternativ hierzu wird der bearbeitete Rohling in einen Ofen eingebracht. Durch Erzeugung eines Unterdrucks bzw. eines Vakuums im Ofen wird eine Si- bzw. SiC-Schmelze bei einer Temperatur von 2.200°C ± 3°C angesaugt, um somit den Rohling zu imprägnieren. Die Imprägnierdauer beträgt dabei etwa 5 Minuten. Anschließend wird das heiße Werkstück im Ofen auf eine Temperatur unter 90°C abgekühlt. Die Abkühlgeschwindigkeit beträgt in der Regel 3,5° bis 4°C/min. Zur schnelleren Kühlung im Ofen kann ein Kühlgas, beispielsweise Stickstoff, eingesetzt werden.

Die Beschichtung des durchgehend graphitierten und bereits fertig bearbeiteten Grundkörpers mit flüssiger SiC- oder Si-Schmelze kann auch in einem Reaktionstauchbad durchgeführt werden. Hierzu wird der bereits durchgehend graphitierte Grundkörper 2 in einen verschließbaren Kohlenstofftiegel eingebracht und so angeordnet, daß er über Stützen oder Röhrchen von allen Innenwänden des Tiegels im wesentlichen gleich beabstandet ist. Der Tiegelboden ist mit Si oder SiC in Pulverform bedeckt. Nach Verschließen des Tiegels wird dieser auf Reaktionstemperatur geheizt, d.h. auf eine Temperatur von ca. 2.200°C. Dabei schmilzt zuerst das Si- bzw. SiC-Pulver. Bei Erreichen der Reaktionstemperatur schlägt sich die flüssige Schmelze schlagartig an dem ebenfalls miterhitzten Werkstück sowie an den Tiegelinnenwänden nieder. Nach Auftreten der Reaktion kann das Beschichtungsverfahren sofort beendet und nach einer Abkühlphase das fertig beschichtete Werkstück aus dem Tiegel entnommen werden.

Die chemische Verbundreaktion zwischen Si- und C-C- ist druckabhängig und tritt bei Temperaturen zwischen 1.700° und 2.200° auf. Unter Vakuum von etwa 10⁻² N/mm² (mbar) genügt es den Tiegel auf etwa 1.700°C bis 1.750°C aufzuheizen.

Das Verfahren kann auch unter einer inerten Atmosphäre, z.B. Stickstoff, durchgeführt werden. Im Gegensatz zu den bekannten Verfahren treten keine giftigen Dämpfe wie SiO auf.

Die nach diesen Verfahren beschichteten Fahrzeugbremsscheiben werden anschließend zumindest im Bereich ihrer Bremsflächen 6 feingeschliffen, wobei Rauhtiefen von etwa 8 bis 10 µm erzielt werden.

## Patentansprüche

1. Verfahren zum Herstellen von mit Siliciumcarbid beschichteten C-C-Reibelementen, insbesondere Fahrzeugbrems- oder Kupplungsscheiben, bei dem auf einen vorgeformten Grundkörper aus C-C-Werkstoff zumindest auf eine Reibfläche die Siliciumcarbidbeschichtung aufgebracht wird, **dadurch gekennzeichnet, dass** der Grundkörper bei einer Temperatur zwischen 1700°C und 2215°C in den graphitierten Zustand übergeführt wird, dass aus Silicium oder Siliciumcarbid vom Grundkörper getrennt eine flüssige Schmelze gebildet wird, und dass die flüssige Schmelze auf den Grundkörper aufgebracht wird.

2. Verfahren nach Anspruch 1, **dadurch gekennzeichnet, dass** die flüssige Schmelze bei einer Grundkörper- und Schmelzetemperatur von 2200°C ± 3°C aufgebracht wird.

3. Verfahren nach Anspruch 1, **dadurch gekennzeichnet, dass** die flüssige Schmelze durch Kurzzeit-Tauchen des Grundkörpers, vorzugsweise in einem Reaktionstauchbad, aufgebracht wird.

4. Verfahren nach Anspruch 1, **dadurch gekennzeichnet, dass** die flüssige Schmelze in einem aufgeheizten Tiegel durch Niederschlagen an dem Grundkörper aufgebracht wird.

5. Verfahren nach Anspruch 1, **dadurch gekennzeichnet, dass** die flüssige Schmelze unter Vakuum aufgebracht wird.

6. Verfahren nach Anspruch 1, **dadurch gekennzeichnet, dass** die SiC-Beschichtung mit einer Dicke zwischen 0,2 bis 0,3 mm gebildet wird.

7. Verfahren nach Anspruch 1, **dadurch gekennzeichnet, dass** der Grundkörper in graphitiertem Zustand und vor dem Aufbringen der SiC-Beschichtung, zumindest an der Reibfläche, mechanisch geglättet, vorzugsweise geschliffen, wird.

8. Verfahren nach Anspruch 1, **dadurch gekennzeichnet, dass** die SiC-Beschichtung überwiegend mit Kristallen in α-Anordnung gebildet wird.

9. Verfahren nach Anspruch 1, **dadurch gekennzeichnet, dass** die beschichtete Reibfläche abschließend fein geschliffen wird, vorzugsweise bis zu Rauhtiefen von etwa 8 bis 10 µm.

## Claims

1. A method of manufacturing silicon carbide-coated C-C friction elements, in particular vehicle brake discs or vehicle coupling discs, comprising the step of applying the silicon carbide coating to at least one friction surface of a preformed basic body consiting of a C-C composite, **characterized in that** said basic body is converted into the graphitized state at a temperature between 1,700°C and 2,215°C, that a liquid melt of silicon or silicon carbide is formed separately from said basic body, and that the liquid melt is then applied to said basic body.

2. A method according to claim 1, **characterized in that** the liquid melt is applied at a basic body and melt temperature of 2,200°C ± 3°C.

3. A method according to claim 1, **characterized in that** the liquid melt is applied by short-time dipping of the basic body, preferably in a reaction dipping bath.

4. A method according to claim 1, **characterized in that** the liquid melt is applied in a heated crucible by deposition on the basic body.

5. A method according to claim 1, **characterized in that** the liquid melt is applied under a vacuum.

6. A method according to claim 1, **characterized in that** the SiC coating is formed with a thickness between 0.2 and 0.3 mm.

7. A method according to claim 1, **characterized in that,** in its graphitized state and prior to the application of the SiC coating, the basic body is mechanically smoothed, preferably ground, at least on the friction surface.

8. A method according to claim 1, **characterized in that** the SiC coating is formed predominantly with crystals in an α arrangement.

9. A method according to claim 1, **characterized in that** the coated friction surface is finally subjected to fine grinding, preferably up to peak-to-valley heights of approx. 8 to 10 µm.

## Revendications

1. Procédé de fabrication d'éléments de friction C-C revêtus de carbure de silicium, en particulier de disques de frein ou d'embrayage pour véhicules automobiles, dans lequel la couche de carbure de silicium est appliquée sur un corps de base préformé en matériau C-C au moins sur une surface de friction, **caractérisé en ce que** le corps de base est transformé dans l'état graphité à une température comprise entre 1700°C et 2215°C, qu'une fusion liquide de silicium ou de carbure de silicium est formée séparément du corps de base, et que la fusion liquide est appliquée sur le corps de base.

2. Procédé suivant la revendication 1, **caractérisé en ce que** la fusion liquide est appliquée à une température de fusion et du corps de base de 2200°C ± 3°C.

3. Procédé suivant la revendication 1, **caractérisé en ce que** la fusion liquide est appliquée par immersion instantanée du corps de base, de préférence dans un bain d'immersion réactionnel.

4. Procédé suivant la revendication 1, **caractérisé en ce que** la fusion liquide est appliquée dans un creuset chauffé par précipitation sur le corps de base.

5. Procédé suivant la revendication 1, **caractérisé en ce que** la fusion liquide est appliquée sous vide.

6. Procédé suivant la revendication 1, **caractérisé en ce que** le revêtement SiC est formé avec une épaisseur comprise entre 0,2 et 0,3 mm.

7. Procédé suivant la revendication 1, **caractérisé en ce que** le corps de base est lissé mécaniquement, de préférence rectifié, dans l'état graphité et avant l'application du revêtement SiC, au moins sur la surface de friction.

8. Procédé suivant la revendication 1, **caractérisé en ce que** le revêtement SiC est formé principalement de cristaux en agencement α.

9. Procédé suivant la revendication 1, **caractérisé en ce que** la surface de friction revêtue est enfin finement rectifiée, de préférence jusqu'à des profondeurs de rugosité d'environ 8 à 10 µm.
